**Europäisches Patentamt**

**European Patent Office**

**Office européen des brevets**

(19)

(11) Veröffentlichungsnummer: **0 386 828**

**A2**

## (12) EUROPÄISCHE PATENTANMELDUNG

(21) Anmeldenummer: **90200470.4**

(22) Anmeldetag: **28.02.90**

(51) Int. Cl.5: **H04J 3/04**

(30) Priorität: **04.03.89 DE 3907050**

(43) Veröffentlichungstag der Anmeldung:
**12.09.90 Patentblatt 90/37**

(84) Benannte Vertragsstaaten:
**DE FR GB IT SE**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**

**Groenewoudseweg 1**
**NL-5621 BA Eindhoven(NL)**

(84) **FR GB IT SE**

(72) Erfinder: **Herzberger, Achim, Dipl.-Ing.**
**Maxtorgraben 37**
**D-8500 Nürnberg 10(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Demultiplexer für ein serielles und isochrones Multiplexsignal.**

(57) Der beschriebene Demultiplexer ist für ein serielles und isochrones Multiplexsignal gedacht, daß aus Q blockweise verschachtelten isochronen Teilsignalen besteht, wobei jeder Block K Bits umfaßt. Ein entsprechender Multiplexer wird ebenfalls beschrieben.

Um den Speicherbedarf bei einem Demultiplexer möglichst gering zu halten, ist vorgesehen, einen Schreib-Lese-Speicher (5) zu verwenden, in den die Bits des Multiplexsignales zyklisch eingelesen und aus dem die Bits der Teilsignale gleichzeitig zyklisch ausgelesen werden. Eine Schreib-Lese-Steuerung (4) koordiniert die Schreib- und Lesevorgänge derart, daß sich keine Kollisionen ergeben.

Über einen Serien-Parallel-Wandler (2) werden die Bits des Multiplexsignales in einem Ausführungsbeispiel bitweise in den Schreib-Lese-Speicher (5) eingelesen. Das Auslesen erfolgt bitweise mit Leselogiken (81, 82, 83, 84), die ebenfalls von der Schreib-Lese-Steuerung (4) mit Hilfe von Adressen gesteuert werden. Am Ausgang (91, 92, 93, 94) einer jeden Leselogik (81, 82, 83, 84) liegen die Teilsignale in serieller Form an.

FIG.3

## Demultiplexer für ein serielles und isochrones Multiplexsignal

Die Erfindung betrifft einen Demultiplexer für ein serielles und isochrones Multiplexsignal, das aus Q blockweise verschachtelten isochronen Teilsignalen besteht, wobei jeder Block K Bits umfaßt. Die Erfindung betrifft auch einen entsprechenden Multiplexer.

Solche Multiplexer und Demultiplexer werden z.B. zum Auf-und Abbau von Digitalsignal-Hierarchien entsprechend den CCITT-Empfehlungsentwürfen G 707, G 708 und G 709 benötigt.

Zur Zerlegung eines Multiplexsignales z.B. in vier Teilsignale erscheint es naheliegend, einen Demultiplexer zu verwenden, bei dem vier aufeinanderfolgende Blöcke des Multiplexsignals in ein entsprechend langes Schieberegister eingelesen werden. Sodann wird jeder der vier Blöcke, von denen jeder zu einem anderen Teilsignal gehört, in ein gesondertes Schieberegister parallel übernommen und aus diesem Schieberegister seriell ausgelesen. Bei diesen und allen ähnlichen Überlegungen zu Demultiplexern bzw. Multiplexern wird unterstellt, daß das Problem der Synchronisation gelöst ist (vgl. hierzu z.B. die EP 0 103 163 B1 und die EP 0 101 056 B1).

Handelt es sich bei dem Multiplexsignal um einen synchronen Transportmodul STM-16, der aus vier synchronen Transportmodulen STM-4 besteht (vergleiche hierzu die oben erwähnten Empfehlungsentwürfe), so würde der eben skizzierte Demultiplexer Schieberegister mitSpeicherplätzen von insgesamt 32 Bytes benötigen.

Da ein Multiplexsignal mit einem STM-16 Rahmen mit einer Bitrate von 2 488,32 Mbit/s übertragen wird - jedes Teilsignal also mit einem Viertel davon - ist bei einem Multiplexer oder einem Demultiplexer für solche Signale besonders auf geringen Speicherbedarf zu achten, da sich sonst erhebliche Probleme bei der Abführung der Wärme ergeben, die durch die elektrische Verlustleistung erzeugt wird. Die Forderung nach geringem Speicherbedarf muß auch gestellt werden, wenn die Anordnung in einer integrierten Schaltung mit ECL-Technologie realisiert werden soll, damit der Platzbedarf möglichst gering ist.

Der Erfindung liegt die Aufgabe zugrunde, einen Demultiplexer und einen entsprechenden Multiplexer anzugeben, dessen Speicherbedarf gegenüber der skizzierten Lösung erheblich reduziert ist.

Diese Aufgabe wird bei einem Demultiplexer durch die im Anspruch 1 gegebenen Merkmale gelöst. Die Lösungsmerkmale für einen Multiplexer sind im Anspruch 2 angegeben. Eine Ausgestaltung des Multiplexers enthält der Anspruch 3.

Die erfindungsgemäßen Schaltungsanordnungen haben den Vorteil, daß sie trotz des relativ geringen Speicherbedarfs mit Takten betrieben werden können, die sich durch einfache Frequenzteilung aus einem einzigen Takt herleiten lassen.

Anhand eines Ausführungsbeispieles und anhand der Figuren soll die Erfindung näher erläutert werden.

Es zeigen:

Fig. 1. den schematischen Aufbau eines Digitalsignales, das aus STM-N-Rahmen (H = 4, 8, 12, 16...) aufgebaut ist.

Fig. 2 eine schematische Darstellung der Multiplex- oder Demultiplexvorschrift und

Fig. 3 einen erfindungsgemäßen Multiplexer bzw. Demultiplexer.

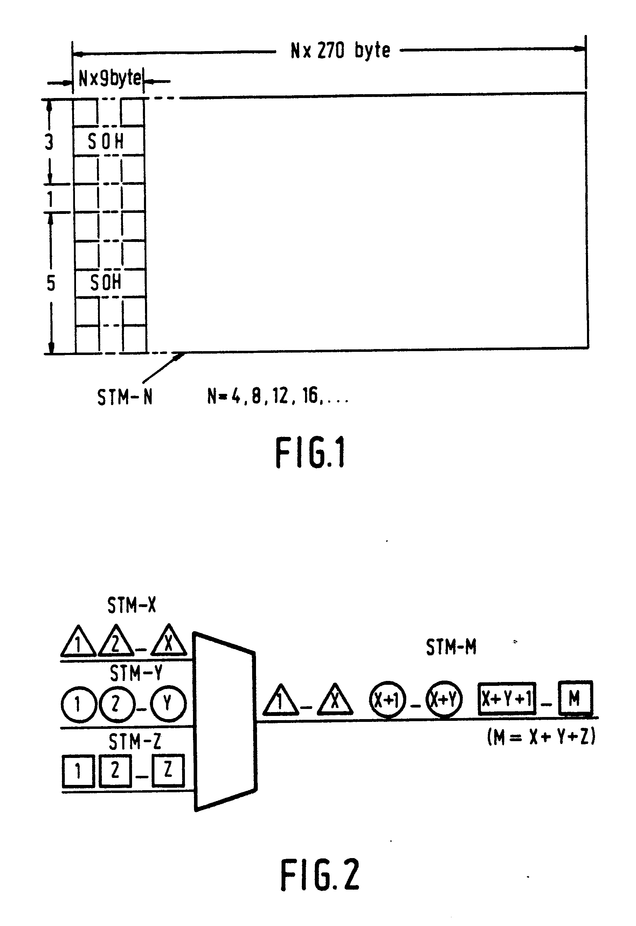

Die Funktion der erfindungsgemäßen Schaltungsanordnung soll beispielhaft an der Zerlegung eines STM-16 Signales in vier STM-4-Signale verdeutlicht werden. Zu diesem Zweck ist in Fig. 1 der Aufbau eines synchronen Transportmoduls STM-N dargestellt, der aus N Transportmoduln der untersten Hierarchiestufe besteht. Digitalsignale dieser untersten Hierarchiestufe werden mit 155 520 kbit/s übertragen. Die nächste Hierarchiestufe ist für die vierfache Bitrate 622 080 kbit/s und synchrone Transportmoduln STM-4 bestimmt. Synchrone Transportmoduln-STM-8, STM-12 und STM-16 sind möglich. In diesen Transportmoduln sind neben den Nutzsignalen Zusatzsignale wie Abschnittsrahmenkopf (section overhead) SOH und Zeiger (pointer) u.a. enthalten.

Die zeitliche Aufeinanderfolge der einzelnen Bits innerhalb eines Rahmens ergibt sich aus Fig. 1 dadurch, daß man die neun Zeilen der Figur nacheinander durchläuft. Jedes Kästchen der Figur entspricht 8 Bit, also einem Byte. Der Abschnittsrahmenkopf der ersten Zeile des STM-N-Transportmoduls wird aus den Abschnittsrahmenköpfen der N Transportmoduln STM-1 gebildet. Er besteht aus N · 9 Byte, wie in Fig. 1 angedeutet. Danach folgen in der ersten Zeile N · 261 Byte mit Informationen; sodann folgt die zweite Zeile mit einem weiteren Abschnittsrahmenkopf, der die gleiche Struktur besitzt wie der erste Abschnittsrahmenkopf. Entsprechendes gilt für die dritte Zeile. Der Anfang der Zeile 4 enthält die sogenannte Zeiger-Information. Auf die vierte Zeile folgen fünf weitere Zeilen mit jeweils einem Abschnittsrahmenkopf zu Beginn der Zeile, bis sich danach der Gesamtrahmen wiederholt.

Die Rahmenköpfe der Transportmoduln ermöglichen eine Synchronisation z.B. von Bitzählern auf den Rahmen des Transportmoduls STM-N.

Fig. 2 zeigt ein allgemeines Schema, wie in Transportmodule strukturierte Signale verschachtelt werden müssen, damit sich ein Multiplexsignal mit einem Transportmodul der in Fig. 1 angedeuteten Struktur ergibt. Die abgebildeten geometrischen Figuren (Dreiecke, Vierecke und Kreise) stellen Bytes der drei zu verschachtelnden Signale dar. Das Multiplexsignal mit dem Modul STM-M ergibt sich aus der Folge von Z Bytes des Teilsignales mit dem Modul STM-Z, aus Y Bytes des Teilsignales mit dem Modul STM-Y und aus X Bytes des Teilsignales mit dem Modul STM-X, wobei M = X + Y + Z ist.

Die Fig. 2 läßt erkennen, daß im nicht näher bezeichneten Multiplexer jedes der Teilsignale gegenüber jedem anderen um eine vorgegebene Zeit verzögert werden muß, damit sich für das Multiplexsignal die vorgeschriebene Struktur ergibt. Wird diese Verzögerung nicht im Multiplexer vorgenommen, so muß sie an anderer Stelle erfolgen, was dann zu einem zeitverzögerten Einlaufen der Signale STM-X, STM-Y und STM-Z an den Eingängen des Multiplexers führt. Wird die Signallaufrichtung umgekehrt, so ist Fig. 2 auch als Demultiplexschema lesbar.

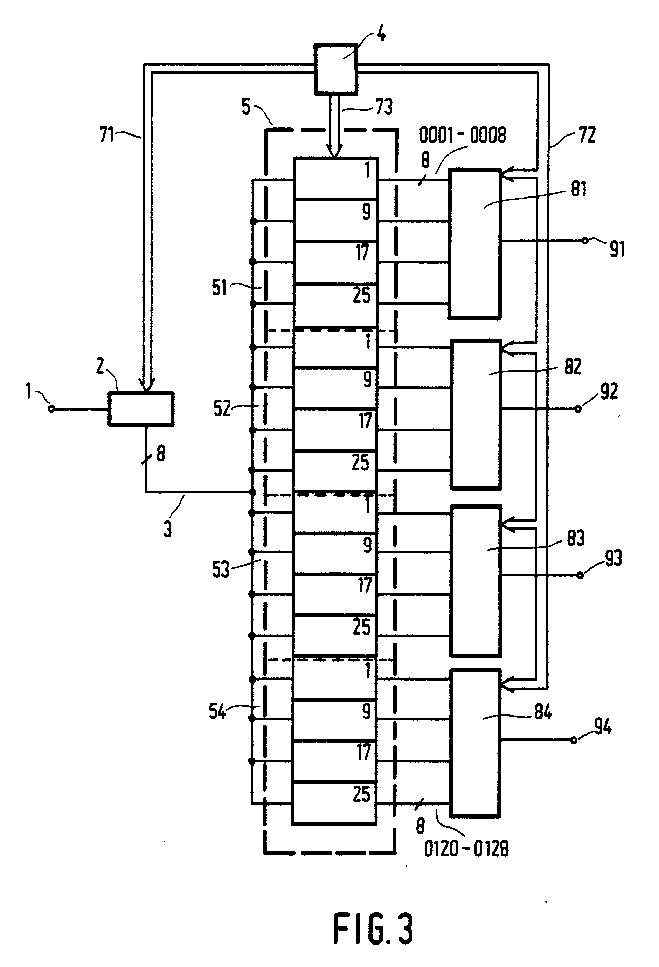

Fig. 3 zeigt das Schaltschema eines erfindungsgemäßen Multiplexers bzw. Demultiplexers. Je nach Signallaufrichtung ist die Schaltung nach der Fig. 3 das Prinzipschaltbild eines Demultiplexers bzw. Multiplexers.

Zunächst soll die Schaltung nach der Fig. 3 als Demultiplexer verstanden werden, mit dem ein Multiplexsignal, das nach Transportmoduln STM-16 strukturiert ist, in vier Teilsignale mit Transportmoduln STM-4 zerlegt wird. Das serielle Multiplexsignal wird an einer Klemme 1 angelegt und durch einen Serien-Parallel-Wandler 2 in acht parallele Bitströme aufgeteilt. Das Multiplexsignal ist isochron, d.h., die Zeitpunkte des Überganges von einem Signalelement zum nächsten sind äquidistant. Die acht Ausgangsleitungen 3 des Serien-Parallel-Wandlers 2 sind mit den Eingängen jeweils acht aufeinanderfolgender Speicherstellen eines Schreib-Lese-Speichers 5 verbunden. Der Schreib-Lese-Speicher hat insgesamt 128 Speicherstellen, die in vier Gruppen 51, 52, 53, 54 zu je 32 Speicherstellen zusammengefaßt sind.

Der in der allgemeinen Lehre des Anspruchs 1 offengelassene Parametersatz (Q, K, W) ist also im vorliegenden Beispiel identisch mit dem Zahlentripel (4, 32, 8).

Eine Schreib-Lese-Steuerung 4 versorgt den Serien-Parallel-Wandler 2 mit den notwendigen Taktimpulsen sowie den Schreib-Lese-Speicher 4 mit Schreib- und Lesetakten. Die vom Serien-Parallel-Wandler 2 kommenden acht Bits werden Parallel - also byteweise - in den Schreib-Lese-Speicher 5 eingeschrieben; der Schreibvorgang erfolgt in periodischen Umläufen mit einem Schreibtakt, dessen Frequenz nominell mit einem Achtel der Bitrate des an der Klemme 1 anliegenden Multiplexsignales übereinstimmt.

Ist die Synchronisation eingerastet, wird in den ersten acht Speicherstellen der Gruppe 51 ein erstes Byte eines ersten Teilsignales eingeschrieben. Die Nummern der Speicherstellen innerhalb der Gruppe 51 sind nicht vollständig angegeben; es ist der Übersicht halber nur jede achte Speicherstelle mit einer Nummer versehen. Gleiches gilt für die Gruppen 52, 53 und 54 von Speicherstellen. Vom ersten Teilsignal werden insgesamt vier Byte eingelesen, darauf vier weitere Bytes von einem zweiten Teilsignal bis zum letzten Byte des vierten Teilsignales; dann beginnt der Schreibvorgang mit den ersten acht Speicherstellen der Gruppe 51 von neuem.

Die Bits, die in den Gruppen 51, 52, 53 und 54 gespeichert sind, werden bitweise ausgelesen und zwar über Leitungen 0001 bis 0128 und Lese-Logiken 81, 82, 83 und 84, die von der Schreib-Lese-Steuerung 4 mit Steuersignalen versorgt werden. In jeder Gruppe 51, 52, 53 und 54 erfolgt die Auslesung zyklisch. Die Leselogik 81 z.B. verbindet über Gatter einen ihrer 32 Eingänge mit dem Ausgang 91. Welcher dieser Eingänge mit dem Ausgang 91 verbunden wird und zu welchem Zeitpunkt, wird von der Schreib-Lese-Steuerung 4 durch Übertragung von Adressen gesteuert. Entsprechendes gilt für die Leselogiken 82, 83, 84 und Ausgänge 92, 93, 94.

Beim Schreib-Lese-Vorgang ist darauf zu achten, daß alle während eines Schreibzyklusses beschriebenen Speicherstellen auch innerhalb eines Lesezyklusses gelesen werden. Anders ausgedrückt:

Es darf keine Überholung des Lesevorganges durch den Schreibvorgang erfolgen (der Schreibvorgang ist der schnellere). Wird z.B. die erste Speicherstelle (zusammen mit den nächsten sieben) der Gruppe 51 beschrieben und die L-te Speicherstelle gelesen, so darf L nicht beliebige Werte zwischen 1 und 32 annehmen. Für beliebige Werte von Q, K und W läßt sich zeigen, daß $L = 1 + [(K-Z) \bmod K]$ sein muß, wobei die ganze Zahl Z der Bedingung $0 \leq Z \leq (K-W)/Q$ zu genügen hat, sonst jedoch frei wählbar ist. Der in den eckigen Klammern stehende Term bedeutet den Rest von K-Z nach Division durch K. Im vorliegenden Beispiel ergibt sich, daß Z alle Werte von 0 bis 6 durchlaufen darf, wie sich durch Einsetzen der aktuellen Größen für Q, K und W in die Formel für Z nachprüfen läßt. Als Folgerung für L ergibt sich hieraus:

Wird die erste Speicherstelle (zusammen mit den nächsten sieben) beschrieben, so muß der Lesevorgang entweder mit der ersten oder mit einer der Speicherstellen von 27 bis 32 beginnen, damit der Schreibvorgang nicht den Lesevorgang überholt. Im vorliegenden Beispiel sorgt die Schreib-Lese-Steuerung 4 dafür, daß die 28-ste Speicherstelle gelesen wird, wenn die erste (zusammen mit den nächsten sieben) beschrieben wird.

Entsprechend läßt sich im allgemeinen Fall zeigen, daß die Rahmen der an den Ausgangsklemmen eines Demultiplexers abnehmbaren Signale um $K \cdot Q$ Bits gegeneinander verschoben sind. Angewendet auf das vorliegende Beispiel heißt das, daß die Rahmen der an den Ausgangsklemmen 91, 92, 93 und 94 anliegenden Signale jeweils um ein Byte gegeneinander verschoben sind.

Diese Verschiebung ist bei einem Demultiplexer ohne Bedeutung, sofern die Teilsignale unabhängig voneinander weitergegeben werden können. Sie wird jedoch bei der Verschachtelung der Signale - also bei einem Multiplexer -wichtig, wenn das Ergebnis der Verschachtelung in seiner Struktur vorgeschrieben ist (vgl. hierzu Fig. 2).

Im folgenden wird die Schaltung nach Fig. 3 als Multiplexer verstanden, der vier Teilsignale, die nach Transportmoduln STM-4 strukturiert sind, zu einem Multiplexsignal mit STM-16-Rahmen zusammenfaßt.

Die Teilsignale liegen dann an den Klemmen 91, 92, 93 und 94 an und sind der Reihe nach um ein Byte gegeneinander verschoben. Diese Verschiebung wird von Bausteinen vorgenommen, auf die hier nicht näher eingegangen werden soll.

Die Funktionsweise eines derartigen Multiplexers ergibt sich ohne weiteres aus der des Demultiplexers, wenn man Schreibvorgänge durch Lesevorgänge und Lesevorgänge durch Schreibvorgänge ersetzt und als Baustein 2 einen Parallel-Serien-Wandler verwendet. Die Bausteine 81, 82, 83 und 84 sind dann Schreiblogiken, die - mit Adressen von der Schreib-Lese-Steuerung 4 gesteuert - ihren Eingang 91, 92, 93 oder 94 mit einem ihrer Ausgänge verbinden.

Der Lesevorgang auf der in Fig. 3 gezeigten linken Seite des Schreib-Lese-Speichers 5 ist der schnellere Vorgang. Deshalb muß die Schreib-Lese-Steuerung 4 dafür sorgen, daß der Schreibvorgang nicht vom Lesevorgang überholt wird. Die Bedingungen hierfür sind die gleichen wie im Falle des Demultiplexers. Insbesondere heißt das für das vorliegende Beispiel, daß nur eine der Speicherstellen 1, 27, 28, 29, 30, 31 oder 32 beschrieben werden darf, wenn die erste Speicherstelle (zusammen mit den nächsten sieben) gelesen wird. An der Klemme 1 ist schließlich das Multiplexsignal abnehmbar.

Sowohl Demultiplexer als auch Multiplexer benötigen im vorliegenden Beispiel einen Schreib-Lese-Speicher 5 mit Speicherplätzen für 16 Byte.

**Ansprüche**

1. Demultiplexer für ein serielles und isochrones Multiplexsignal, das aus $Q$ ($Q = 2, 3, 4...$) blockweise verschachtelten isochronen Teilsignalen besteht, bei dem jeder Block $K$ ($K = 2, 3, 4...$) Bits umfaßt,
- mit einem Serien-Parallel-Wandler (2), der $W$ serielle Bits ($W = 1, 2, 3...$) des Multiplexsignales in $W$ parallele Bits wandelt, wobei $W$ Teiler von $K$ ist,
- mit einem Schreib-Lese-Speicher (5), der $Q$ Gruppen von Speicherstellen (51, 52, 53, 54) zu je $K$ Speicherstellen für ein Bit enthält,
- mit einer Schreib-Lese-Steuerung (4), mit deren Hilfe in periodischen Umläufen Bits des Serien-Parallel-Wandlers (2) parallel in $W$ aufeinanderfolgende Speicherstellen des Schreib-Lese-Speichers (5) eingeschrieben werden und die Bits der $K$ Speicherstellen einer jeden Gruppe (51, 52, 53, 54) zyklisch ausgelesen werden, und
- die Schreib-Lese-Steuerung (4) derart angeordnet ist, daß der Lesevorgang an der $L$-ten Speicherstelle einer Gruppe (51, 52, 53, 54) beginnt, wenn die erste Speicherstelle der Gruppe beschrieben wird, wobei $L = 1 + [(K-Z) \bmod K]$ und die ganze Zahl $Z$ der Bedingung $0 \leq Z \leq (K-W)/Q$ genügt, sowie
- mit Mitteln (81, 82, 83, 84), die die Bits der ausgelesenen Speicherstellen einer Gruppe (51, 52, 53 54) zu einem seriellen Teilsignal zusammenfassen.

2. Multiplexer zum blockweisen Verschachteln von $Q$ isochronen Teilsignalen zu einem isochronen Multiplexsignal, wobei jeder Block $K$ aus ($K = 2, 3, 4,...$) Bits besteht,
- mit Mitteln (81, 82, 83, 84), mit denen je $K$ aufeinanderfolgende Bits eines jeden Teilsignales auf $K$ Leitungen verteilt werden,
- mit einem Schreib-Lese-Speicher (S), der $Q$ Gruppen von Speicherstellen (51, 52, 53, 54) zu je $K$ Speicherstellen für ein Bit enthält,
- mit einer Schreib-Lese-Steuerung (4), mit deren Hilfe die $K$ Speicherstellen einer jeden Gruppe (51, 52, 53, 54) zyklisch mit den Bits eines Teilsignales beschrieben werden und in periodischen Umläufen $W$ Bits aufeinanderfolgenden Speicherstellen parallel ausgelesen werden, und
- die Schreib-Lese-Steuerung (4) derart angeordnet ist, daß der Schreibvorgang an der $L$-ten Speicherstelle einer Gruppe (51, 52, 53, 54) beginnt, wenn die erste Speicherstelle der Gruppe gelesen wird, wobei $L = 1 + [(K-Z) \bmod K]$ und die ganze Zahl $Z$ der Bedingung $0 \leq Z \leq (K-W)/Q$ genügt, sowie
- mit einem Parallel-Serien-Wandler (2), der $W$ parallel ausgelesene Bits ($W = 1, 2, 3,...$) in $W$ serielle Bits des Multiplexsignals wandelt, wobei $W$ Teiler von $K$ ist.

3. Multiplexer nach Anspruch 2,
dadurch gekennzeichnet,
daß für den Fall, in dem alle Teilsignale nach gleichen Rahmen strukturiert sind, jedes Teilsignal gegenüber dem nächstfolgenden um K/Q Bits verzögert ist und daß in diesem Fall Q Teiler von K ist.

FIG.1

FIG.2

FIG.3